## Europäisches Patentamt

## European Patent Office

## Office européen des brevets

(19)

(11) Veröffentlichungsnummer: **0 204 121**

**B1**

(12) # EUROPÄISCHE PATENTSCHRIFT

(45) Veröffentlichungstag der Patentschrift:
**25.01.89**

(51) Int. Cl.⁴: **F 01 L 3/04**

(21) Anmeldenummer: **86105574.7**

(22) Anmeldetag: **22.04.86**

(54) **Verfahren zur Herstellung eines thermisch und mechanisch hoch belastbaren sowie gegen Heisskorrosion geschützten Gaswechselventiles einer schwerölbetriebenen Brennkraftmaschine.**

(30) Priorität: **11.05.85 DE 3517077**

(43) Veröffentlichungstag der Anmeldung:
**10.12.86 Patentblatt 86/50**

(45) Bekanntmachung des Hinweises auf die Patenterteilung:
**25.01.89 Patentblatt 89/4**

(84) Benannte Vertragsstaaten:
**CH DE FR GB LI NL**

(56) Entgegenhaltungen:
**FR-A-2 380 419**
**FR-A-2 421 950**
**US-A-4 079 224**
**US-A-4 122 817**

**Handbuch von Teves-Thompson GmbH, 4. Auflage 1977, Seite 15, Barsinghausen/Hannover, DE**

(73) Patentinhaber: **M.A.N. - B&W Diesel GmbH, Stadtbachstrasse 1, D-8900 Augsburg 1 (DE)**

(72) Erfinder: **Amende, Welf, Dr.- Ing., Salzburgerstrasse 1, D-8000 München 60 (DE)**
Erfinder: **Lausch, Wolfram, Dr.- Ing., Grainauer Weg 9f, D-8900 Augsburg (DE)**

EP 0 204 121 B1

**Beschreibung**

Die Erfindung betrifft ein Verfahren zur Herstellung eines thermisch und mechanisch hoch belastbaren sowie gegen Heißkorrosion geschützten Gaswechselventiles einer schwerölbetriebenen Brennkraftmaschine, an dessen Ventilteller ein gepanzerter Ventilsitz in der Weise angebracht wird, daß in eine umlaufende Vertiefung eingebrachtes, aus einer Nickel- bzw. Kobaltbasis-Superlegierung bestehendes Panzermaterial durch ein Umschmelzverfahren mit dem Ventilgrundmaterial verbunden und anschließend an dieser Panzerschicht außen eine Ventilsitzfläche sowie eine Ventiltellerumfangsfläche angeschliffen werden.

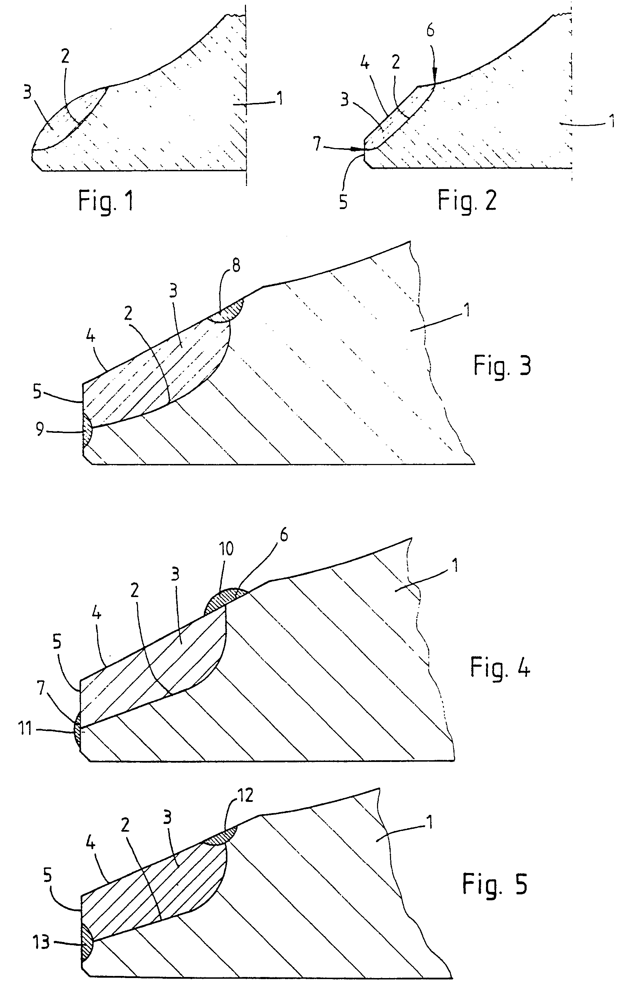

Dieses Verfahren ist aus "Lasers In Modern Industry", 1979, Artikel in Seiten 128 bis 134, "High Power Laser Surface Treatment" bekannt. Die Panzerung eines Gaswechselventiles ist dort aus den Kapiteln "Valve cladding" und "Valve alloying" in Verbindung mit den Figuren 4 bis 8 ersichtlich. Dabei wird in eine am Ventilteller des Gaswechselventiles umlaufende Vertiefung eingebrachtes Panzermateril mittels eines Hochleistungs-Lasers mit dem Ventilgrundmaterial verbunden, wobei das Panzermaterial im Übergangsbereich mit dem Ventilgrundmaterial umgeschmolzen wird. Die Umschmelzzone beträgt dabei jedoch nur einige tausendstel Millimeter. Trotz dieser relativ innigen Verbindung des Panzermateriales mit dem Ventilgrundmaterial kommt es an einem solchermaßen hergestellten Gaswechselventil bei dessen Einsatz in einer schwerölbetriebenen Brennkraftmaschine zu Korrosion, und zwar sowohl Naß- als auch Heißkorrosion undhier bevorzugt zu einer sogenannnten Messerkorrosion an den beiden äußeren ringsumlaufenden Übergängen zwischen Panzermaterial und Ventilgrundmaterial (siehe auch US-A-4 122 817).

Es ist deshalb Aufgabe der Erfindung, ein Verfahren zur Herstellung eines thermisch und mechanisch hoch belastbaren sowie gegen Korrosion geschützten Gaswechselventiles einer schwerölbetriebenen Brennkraftmaschine anzugeben, nach dessen Anwendung das Gaswechselventil im Maschinenbetrieb so geschützt ist, daß eine Messerkorrosion an den beiden äußeren am Ventilteller umlaufenden Übergangsstellen zwischen Panzermaterial und Ventilgrundmaterial weitestgehend vermeidbar ist und die heißkorrosive Wirkung der Schwerölverbrennungsrückstände während des Motorbetriebes sowie die naßkorrosive Wirkung der Schwerölrückstände und Schwerölbestandteile beim Motorstillstand sich nicht mehr negativ auf die Verbindung zwischen Ventilgrundmaterial und dem den Ventilsitz bildenden Panzermaterial auswirken kann.

Diese Aufgabe ist erfindungsgemäß nach zwei verschiedenen Methoden lösbar, zum einen wie im Anspruch 1 beansprucht dadurch, daß nach dem Anschleifen der Ventilsitzfläche und der Ventiltellerumfangsfläche die außen umlaufenden Nahtstellen am Übergang zwischen Ventilgrundmaterial und Panzermaterial durch gezielte Wärmezufuhr örtlich begrenzt für den Erhalt zweier am Ventilteller ringsumlaufender Schutzschichten umgeschmolzen werden, oder, wie im Anspruch 2 gekennzeichnet dadurch, daß nach dem Anschleifen der Ventilsitzfläche und der Ventiltellerumfangsfläche über die beiden außen am Ventilteller umlaufenden Nahtstellen am Übergang vom Panzermaterial zum Ventilgrundmaterial jeweils eine seitlich begrenzte Schicht aus Panzermaterial aufgebracht wird und dann jede dieser Schichten durch gezielte Wärmezufuhr mit der am Übergang vorhandenen Materialpaarung für den Erhalt zweier am Ventilteller ringsumlaufender Schutzschichten umgeschmolzen werden.

Vorteilhafte Details dieses Verfahrens sind in den Unteransprüchen gekennzeichnet.

Unabhängig davon, nach welcher Methode das Gaswechselventil gegen korrosiven Angriff geschützt wird, ergeben sich durch das örtlich begrenzte Umschmelzen am Ventilteller zwei umlaufende Umschmelzzonen, durch die verhindert ist, daß die Nahtstellen zwischen dem den Ventilsitz bildenden Panzermaterial und dem Ventilgrundmaterial bis zur Außenfläche des Ventiltellers auslaufen. Die umgeschmolzene Zone bildet dabei eine relativ breite, umlaufende Abdeckung für die Nahtstelle zwischen dem Ventilgrundmaterial und dem den Ventilsitz bildenden Panzermaterial.

Nachstehend sind die erfindungsgemäßen Verfahren anhand der Zeichnung näher erläutert. In der Zeichnung zeigen:

Figur 1: Ein Gaswechselventil für eine schwerölbetriebene Brennkraftmaschine nach Anbringung der den Ventilsitz bildenden Panzermaterialschicht, Figur 2: das Gaswechselventil von Fig. 1 nach dem Formschleifen des Ventiltellers im Bereich seiner Ventilsitzpanzerung,

Figur 3: das Gaswechselventil von Fig. 2 nach der Nachbehandlung durch die erste erfindungsgemäße Methode,

Figur 4: das Gaswechselventil von Fig. 2 nach dem ersten Verfahrensschritt der zweiten erfindungsgemäßen Nachbehandlungsmethode,

Figur 5: das Gaswechselventil von Fig. 4 nach dem zweiten Schritt der zweiten erfindungsgemäßen Nachbehandlungsmethode.

Zunächst sei darauf hingewiesen, daß es sich bei dem in den Figuren dargestellten Gaswechselventil sowohl um das Auslaßventil als auch das Einlaßventil einer schwerölbetriebenen Brennkraftmaschine handeln kann. Auch wenn das Einlaßventil thermisch nicht so hoch wie das Auslaßventil belastet ist, so ist es doch ebenso wie letzteres dem heißkorrosiven Angriff der Schwerölverbrennungsrückstände während des Maschinenbetriebes sowie der naßkorrosiven Wirkung der Schwerölrückstände und Schwerölbestandteile während des Motorstillstandes ausgesetzt.

In den Figuren ist jeweils nur teilweise der Ventilteller 1 eines desweiteren nicht dargestellten Gaswechselventiles gezeigt. Um am Ventilteller 1 einen gepanzerten Ventilsitz zu erhalten, wird zunächst am Ventilteller 1 eine umlaufende Vertiefung 2 geschaffen. In diese umlaufende Vertiefung 2 wird dann ein aus einer Nickel- bzw. Kobaltbasis-Superlegierung bestehendes Panzermaterial eingebracht und durch ein Umschmelzverfahren mit dem Ventilgrundmaterial verbunden. Dies geschieht unter Anwendung der Plasmaschweißtechnik oder mittels eines Hochleistungs-Lasers. Nach diesem Verfahrensschritt ist am Ventilteller 1 - wie aus Figur 1 ersichtlich - eine umlaufende, die Vertiefung 2 vollständig auffüllende Schicht 3 aus dem besagten Panzermaterial vorhanden, die fest mit dem Ventilgrundmaterial verbunden ist.

Diese feste Verbindung ist dadurch gegeben, daß bedingt durch das Umschmelzverfahren das Panzermaterial in der Übergangszone am Boden der umlaufenden Vertiefung 2 geringfügig (einige hundertstel Millimeter) mit dem Ventilgrundmaterial umgeschmolzen wird und eindiffundiert.

Anschließend wird der Ventilteller 1 auf Endform nachgearbeitet, wobei - wie aus Figur 2 ersichtlich - unter Abtragung eines Teils der Panzermaterialschicht 3 eine hier keglige Ventilsitzfläche 4 sowie eine zylindrische Ventiltellerumfangsfläche 5 angeschliffen werden.

Nach diesem Behandlungsvorgang kam bisher ein solches Gaswechselventil zum Einsatz in einer schwerölbetriebenen Brennkraftmaschine. Infolge des korrosiven Angriffes zeigte sich an den äußeren, ringsumlaufenden Nahtstellen - siehe Pfeile 6 und 7 in Fig. 2 - am Übergang zwischen dem Panzermaterial 3 und dem Ventilgrundmaterial, daß Korrosion an diesen Stellen auftritt. Diese Korrosion offenbart sich sichtbar in Form eines Spaltes, der sich mit zunehmender Betriebsdauer vergrößert und schlimmstenfalls unter Einwirkung der mechanischen Betriebsbelastung des Gaswechselventiles zum Abreißen der Schicht 3 aus Panzermaterial führen kann.

Um diese nachteiligen Auswirkungen zu vermeiden und um das Gaswechselventil gegen die korrosiven Wirkungen dieser Schwerölverbrennungsrückstände und der Schwerölanteile an den äußeren umlaufenden Nahtstellen 6 und 7 zu schützen, wird das Gaswechselventil nach der Erfindung gezielt nachbehandelt, wobei zwei verschiedene Methoden anwendbar sind.

Die erste erfindungsgemäße Methode besteht dabei darin, daß nach dem Anschleifen der Ventilsitzfläche 4 und der Ventiltellerumfangsfläche 5 die außen umlaufenden Nahtstellen 6 und 7 am Übergang zwischen Ventilgrundmaterial und Panzermaterial 3 durch gezielte Wärmezufuhr örtlich begrenzt umgeschmolzen werden. Die gezielte Wärmezufuhr erfolgt dabei vorzugsweise durch den jeweils auf die umlaufenden Nahtstellen 6 und 7 fokussierten Strahl eines Hochleistungs-Lasers. Dadurch werden die vorher am Ventilteller in dessen Umfangsfläche auslaufenden ringsumlaufenden Nahtstellen 6 und 7 durch eine mehrere Zehntel Millimeter dicke, aus umgeschmolzenem Panzermaterial und Ventilgrundmaterial bestehende, jeweils am Ventilteller ringsumlaufende Schutzschicht 8 und 9 abgedeckt.

Etwas anders wird bei der zweiten erfindungsgemäßen Methode verfahren. Dort wird - wie aus Fig. 4 ersichtlich - nach dem Anschleifen der Ventilsitzfläche 4 und der Ventiltellerumfangsfläche 5 am Ventilteller 1 des Gaswechselventiles zunächst über jede der beiden außen umlaufenden Nahtstellen 6 und 7 am Übergang vom Panzermaterial zum Ventilgrundmaterial eine seitlich begrenzte Schicht 10 bzw. 11 aus Panzermaterial angebracht. Bei diesem Panzermaterial kann es sich um das gleiche wie das den Ventilsitz bildende Panzermaterial oder ein ähnliches Panzermaterial handeln. Die Dicke dieser Schichten 10 bzw. 11 kann bis zu einigen Zehntel Millimeter betragen. Die Aufbringung der beiden vor den Nahtstellen 6 und 7 am Ventilteller 1 ringsumlaufenden Schichten 10 und 11 aus Panzermaterial kann beispielsweise durch das an sich bekannte Flammspritzverfahren oder durch Auftragen von in einem flüssigen Bindemittel gebundenem pulverförmigen Panzermaterial erfolgen. Im nächsten Verfahrensschritt wird dann jede der beiden Schichten 10 und 11 aus Panzermaterial durch gezielte Wärmezufuhr mit der am Ventilteller an den Nahtstellen bereits vorhandenen Materialpaarung umgeschmolzen. Auch in diesem Fall wird die gezielte Wärmezufuhr vorzugsweise durch einen jeweils auf die Schicht 10 bzw. 11 fokussierten Strahl eines Hochleistungs-Lasers durchgeführt. Dadurch ergeben sich am Ventilteller 1 - wie aus Fig. 5 ersichtlich - zwei ringsumlaufende Schutzschichten 12 und 13, die die Übergangsbereiche vom Ventilsitzpanzermaterial zum Ventilgrundmaterial an der Außenseite des Ventiltellers 1 vollständig abdecken. Diese Schutzschichten 12 und 13 bestehen aus einem umgeschmolzenen Material, das sich aus dem Material der Schichten 10 und 11 sowie dem den Ventilsitz bildenden Panzermaterial 3 und den Ventilgrundmaterial zusammensetzt.

Nach Durchführung der erfindungsgemäßen Verfahrensschritte ist lediglich nochmals ein kurzes Überschleifen der Ventilsitzfläche 4 erforderlich, um dessen Oberfläche im Bereich der Schutzschicht 8 bzw. 12 zu glätten und auf Maßhaltigkeit zu bringen.

Unabhängig davon, nach welcher Methode verfahren wird, bewirken die den Übergang von dem den Ventilsitz bildenden Panzermaterial 3 zum Ventilgrundmaterial außen abdeckenden Schutzschichten 8, 9 einerseits bzw. 12, 13 andererseits, daß eine Korrosion am Übergang vom den Ventilsitz bildenden Panzermaterial 3 zum Ventilgrundmaterial nicht mehr auftreten kann. Das Gaswechselventil ist damit wirksam gegen die korrosiven Angriffe der Schwerölruckstände und Schwerölbestandteile geschützt, womit sich dessen Einsatzdauer in einer schwerölbetriebenen Brennkraftmaschine erheblich verlängert.

**Patentansprüche**

1. Verfahren zur Herstellung eines thermisch und mechanisch hoch belastbaren sowie gegen Korrosion geschützten Gaswechselventiles einer schwerölbetriebenen Brennkraftmaschine, an dessen Ventilteller (1) ein gepanzerter Ventilsitz in der Weise angebracht wird, daß in eine umlaufende Vertiefung (2) eingebrachtes, vorzugsweise aus einer Nickel- bzw. Kobaltbasis-Superlegierung bestehendes Panzermaterial (3) durch ein Umschmelzverfahren mit dem Ventilgrundmaterial verbunden wird und anschließend an dieser Panzerschicht außen eine Ventilsitzfläche (4) sowie eine Ventiltellerumfangsfläche (5) angeschliffen werden,
    dadurch gekennzeichnet,
    daß nach dem Anschleifen der Ventilsitzfläche (4) und der Ventiltellerumfangsfläche (5) die außen umlaufenden Nahtstellen (6, 7) am Übergang zwischen Ventilgrundmaterial und Panzermaterial (3) durch gezielte Wärmezufuhr örtlich begrenzt für den Erhalt zweier am Ventilteller (1) ringsumlaufender Schutzschichten (8, 9) umgeschmolzen werden.

2. Verfahren zur Herstellung eines thermisch und mechanisch hoch belastbaren sowie gegen Heißkorrosion geschützten Gaswechselventiles einer schwerölbetriebenen Brennkraftmaschine, an dessen Ventilteller (1) ein gepanzerter Ventilsitz in der Weise angebracht wird, daß in eine umlaufende Vertiefung (2) eingebrachtes, vorzugsweise aus einer Nickel- bzw. Kobaltbasis-Superlegierung bestehendes Panzermaterial (3) durch ein Umschmelzverfahren mit dem Ventilgrundmaterial verbunden wird und anschließend an dieser Panzerschicht außen eine Ventilsitzfläche (4) sowie eine Ventiltellerumfangsfläche (5) angeschliffen werden,
    dadurch gekennzeichnet,
    daß nach dem Anschleifen der Ventilsitzfläche (4) und der Ventiltellerumfangsfläche (5) über die beiden außen am Ventilteller (1) umlaufenden Nahtstellen (6, 7) am Übergang vom Panzermaterial (3) zum Ventilgrundmaterial jeweils eine seitlich begrenzte Schicht (10, 11) aus Panzermaterial aufgebracht wird und dann jede dieser Schichten (10, 11) durch gezielte Wärmezufuhr mit der am Übergang vorhandenen Materialpaarung für den Erhalt zweier am Ventilteller (1) ringsumlaufenden Schutzschichten (12, 13) umgeschmolzen werden.

3. Verfahren nach Anspruch 1 oder 2, dadurch gekennzeichnet,
    daß die gezielte Wärmezufuhr durch einen jeweils auf den Bereich der Nahtstelle (6 bzw. 7) fokussierten Strahl eines Hochleistungs-Lasers erfolgt.

4. Verfahren nach Anspruch 2, dadurch gekennzeichnet,
    daß das die Schutzschicht (10 bzw. 11) bildende Panzermaterial gleich den das den Ventilsitz bildende Panzermaterial (3) ist.

5. Verfahren nach Anspruch 2, dadurch gekennzeichnet,
    daß die Schicht (10 bzw. 11) aus Panzermaterial nach den Flammspritzverfahren aufgebracht wird.

6. Verfahren nach Anspruch 2, dadurch gekennzeichnet,
    daß die Schicht (10 bzw. 11) in Form eines in einem flüssigen Bindemittel gebundenen pulverförmigen Panzermaterial aufgebracht wird.

**Claims**

1. Method of manufacturing a gas exchange valve with a high heat and mechanical resistance, and protected against corrosion, for a combustion engine using heavy oil, on the valve disc (1) of which an armoured valve seat is made in such a way that armoured material (3) introduced into a circumferential depression (2) and preferably comprising a nickel- or cobalt-based superalloy is merged by a remelt process with the basic valve material, and then a valve seat surface (4) and a valve disc peripheral surface (5) are ground on this armoured layer, characterised in that after the grinding of the valve seat surface (4) and the valve disc peripheral surface (5) the externally running boundary seams (6, 7) are remelted in a locally restricted manner by directed application of heat at the transition between the basic valve material and the armoured material (3) to obtain two protective layers (8, 9) running round the valve disc (1).

2. Method of manufacturing a gas exchange valve with a high heat and mechanical resistance, and protected against corrosion, for a combustion engine using heavy oil, on the valve disc (1) of which an armoured valve seat is made in such a way that armoured material (3) introduced into a circumferential depression (2) and preferably comprising a nickel- or cobalt-based superalloy is merged by a remelt process with the basic valve material, and then a valve seat surface (4) and a valve disc peripheral surface (5) are ground on this armoured layer, characterised in that, after the grinding of the valve seat surface (4) and the valve disc peripheral surface (5), a laterally limited layer (10, 11) of armoured material is applied over the two boundary seams (6, 7) running round the outside of the valve disc (1) at the transition of the armoured material (3) to the basic valve material, and then, by directed application of heat, each of these layers (10, 11) is remelted with the material blend present at the transition to obtain two protective layers (12, 13) running round the valve disc (1).

3. Method according to claim 1 or 2, characterised in that the directed application of heat is effected by a beam of a high-power laser focussed on the area of the boundary seam (6 or 7).

4. Method according to claim 2, characterised in that the armoured material forming the protective layer (10 or 11) is the same as the armoured material (3) forming the valve seat.

5. Method according to claim 2, characterised in that the layer (10 or 11) of armoured material is applied after the flame spraying processes.

6. Method according to claim 2, characterised in that the layer (10 or 11) is applied in the form of a powdered armoured material bonded in a liquid bonding agent.

**Revendications**

1. Procédé pour la fabrication d'une soupape de distribution des gaz de moteur à combustion interne à huile lourde capable de supporter de hautes contraintes thermiques et mécaniques élevées et protégée contre la corrosion par la chaleur, sur la tête (1) de laquelle on forme une surface d'appui cuirassée en réunissant une matière de cuirasse (3), logée dans un évidement périphérique (2), composée de préférence d'un super alliage à base de nickel et de cobalt à la matière de base de la soupape par un procédé de refusion et en rectifiant ensuite sur cette couche de cuirasse, une surface d'appui (4) et une surface circonférentielle (5) de la tête, caractérisé en ce que, après la rectification de la surface d'appui (4) de la soupape et de la surface circonférentielle (5) de la tête de la soupape, les zones de joint périphériques extérieures (6, 7) situées à la jonction entre la matière de base de la soupape et la matière de cuirasse (3) sont refondues dans une mesure localement limitée, par un apport de chaleur adapté, de façon à obtenir deux couches de protection (8, 9) qui s'étendent en anneau le long de la périphérie de la tête (1) de la soupape.

2. Procédé pour fabriquer une soupape de distribution de gaz pour un moteur à combustion interne à huile lourde capable de supporter de hautes contraintes thermiques et mécaniques et protégée contre la corrosion à chaud, sur la tête (1) de laquelle, on forme une surface d'appui de soupape cuirassée par le fait qu'une matière de cuirasse (3) composée de préférence d'un superalliage à base de nickel ou de cobalt, déposé dans un évidement périphérique (2), est réunie à la matière de base de la soupape par un procédé de refusion et, ensuite, on rectifie sur cette couche de cuirasse, extérieurement, une surface (4) d'appui de la soupape ainsi qu'une surface circonférentielle de tête de la soupape, caractérisé en ce que, après la rectification de la surface d'appui (4) de la soupape et de la surface périphérique (5) de la soupape, on dépose sur les deux zones de joint (6, 7) qui entourent extérieurement la tête (1) de la soupape, à la jonction entre la matière de cuirasse (3) et la matière de base de la soupape, une couche (10, 11) de matière de cuirasse limitée latéralement et, ensuite, on refond chacune de ces couches (10, 11), par un apport de chaleur adapté, avec la combinaison de matière présente à la jonction, de manière à obtenir deux couches de protection (12, 13) qui s'étendent en anneau le long de la périphérie de la tête (1) de la soupape.

3. Procédé selon la revendication 1 ou 2, caractérisé en ce que l'apport de chaleur adapté est réalisé par un faisceau d'un laser à haute puissance qui est focalisé sur la région du joint (6 ou 7 respectivement).

4. Procédé selon la revendication 2, caractérisé en ce que la matière de cuirasse qui forme la couche de protection (10 ou 11 respectivement) est identique à la matière de cuirasse (3) qui forme la surface d'appui de la soupape.

5. Procédé selon la revendication 2, caractérisé en ce que la couche (10 ou 11 respectivement) de matière de cuirasse est déposée par le procédé de projection à la flamme.

6. Procédé selon la revendication 2, caractérisé en ce que la couche (10 ou 11 respectivement) est déposée sous la forme d'une matière de cuirasse pulvérulente liée dans un liant liquide.

Fig. 1

Fig. 2

Fig. 3

Fig. 4

Fig. 5